# EUROPÄISCHE PATENTSCHRIFT

(11) **EP 3 347 995 B1**
(45) Veröffentlichungstag und Bekanntmachung des Hinweises auf die Patenterteilung: **24.03.2021**
(21) Anmeldenummer: 16763511.9
(22) Anmeldetag: 09.09.2016
(51) Int. Cl.: H04B 1/40, H04B 7/0413, H04B 7/10, H04W 88/08

(54) **EINRICHTUNG ZUM SENDEN UND EMPFANGEN VON MOBILFUNK-SIGNALEN MITTELS EINER STATIONÄREN ANTENNE**
DEVICE FOR TRANSMITTING AND RECEIVING MOBILE RADIO SIGNALS BY MEANS OF A STATIONARY ANTENNA
DISPOSITIF D'ÉMISSION ET DE RÉCEPTION DE SIGNAUX DE RADIOCOMMUNICATIONS MOBILES AU MOYEN D'UNE ANTENNE STATIONNAIRE

(30) Priorität: 10.09.2015 DE 102015011875
(43) Veröffentlichungstag der Anmeldung: 18.07.2018
(73) Patentinhaber: TELEFONAKTIEBOLAGET LM ERICSSON (PUBL), 164 83 Stockholm (SE)
(72) Erfinder: GABRIEL, Roland, 83556 Griesstätt (DE); SCHELL, Georg, 83064 Raubling (DE); HEISENBERG, Michael, 83059 Kolbermoor (DE)
(74) Vertreter: Flach Bauer Stahl Patentanwälte Partnerschaft mbB
(86) Internationale Anmeldenummer: PCT/EP2016/071291
(87) Internationale Veröffentlichungsnummer: WO 2017/042327

(56) Entgegenhaltungen:
- DE-A1-102004 062 000
- GB-A- 2 300 549
- JP-A- H11 122 131
- US-A1- 2005 176 458
- US-A1- 2005 215 288
- US-A1- 2007 173 288

## Beschreibung

Zunehmend mehr Daten werden heutzutage über mobile Funknetze übertragen. Mobile Endgeräte wie Handys und sogenannte Smart-Phones wie aber auch mit Funkeinrichtung ausgestattete Notebooks, Tablets etc. finden zunehmend größere Verbreitung.

Werden derartige Mobilfunk-Endgeräte beispielsweise auch in Gebäuden eingesetzt, kann es u.a. auch in Abhängigkeit von der Bauweise (wenn z.B. das Gebäude z.B. vor allem unter Verwendung von Beton und unter Einsatz von Armierungen hergestellt wurde) zu einem verschlechterten Antennenempfang kommen.

Um unter diesen Bedingungen eine Verbindung gegebenenfalls überhaupt zu ermöglichen oder zumindest die Qualität einer bestehenden Verbindung zu verbessern, sind weitere Schritte erforderlich. Einer dieser Schritte kann darin liegen, zusätzliche Antennen bereitzustellen, um einen höheren Antennengewinn zu realisieren. Die Kommunikation kann dann innerhalb einer Zelle einer Mobilfunk-Station zu der abgesetzten, in der Regel stationären Antenne und von dort beispielsweise über eine Kabelverbindung oder eine weitere Funkstrecke zu dem Mobilfunk-Endgerät abgewickelt werden.

Eine zusätzliche abgesetzte Einrichtung zum Senden und Empfangen von Mobilfunk-Signalen in verschiedenen Frequenzbereichen ist beispielsweise aus der DE 10 2010 018 509 B4 bekannt geworden. Eine derartige Einrichtung kann beispielsweise zwei oder drei Antennen aufweisen, wobei jede der Sende- und Empfangsantennen für einen anderen Frequenzbereich betrieben wird.

Aber auch für die Anbindung neuer Mobilfunk-Standards, beispielsweise in Form des LTE-Standards (Long Term Evolution) ist es oftmals sinnvoll, separate abgesetzte Antennen mit einem entsprechenden Antennengewinn zu nutzen, um eine hohe Datenrate zu realisieren. Gemäß diesem Standard können beispielsweise auf zwei separaten Empfangspfaden sowohl ein Diversity-Betrieb als auch ein MIMO-Betrieb realisiert werden.

Die der Verbesserung der Empfangseigenschaft dienenden abgesetzten passiven Antennen können beispielsweise zwei Anschlüsse aufweisen, die den Betrieb der Antennen in zwei Polarisationen ermöglichen. Zudem können auch Verstärker verwendet werden, welche für die beiden Kabel einen zusätzlichen Empfangsverstärker beinhalten, wie dies ebenfalls in der DE 10 2010 018 509 B4 beschrieben ist.

Aus der US 2005/0215288 A1 ist eine Basisstation bekannt, die einen Antennenmast und ein Gebäude am Boden neben dem Antennenmast aufweist. Ein Teil der Elektronik (masthead electronics) zum Betrieb der Basisstation ist auf dem Antennenmast angebracht und der restliche Teil (base housing electronics) innerhalb des Gebäudes am Boden. An dem Antennenmast sind mehrere Antennen angeordnet, wobei jeweils eine Hauptantenne und eine Diversitäts-Antenne einen Sektor bilden und wobei die Elektronik, die zu Versorgung eines Sektors (Haupt- und Diversitätsantenne) notwendig ist, über ein Kabel mit der Elektronik in dem Gebäude verbunden ist. Über dieses Kabel werden sowohl die Signale, die die Basisstation an die Teilnehmer aussenden soll (Downlink) als auch diejenigen Signale, die die Basisstation von den Teilnehmern empfängt (Uplink), übertragen. Hierzu stehen jeweils entsprechende Duplexer zu Verfügung, die Sende- und Empfangssignale trennen. Ein Teil der Elektronik in dem Antennenmast dient dazu, dass diejenigen Signale, die die Basisstation von den Teilnehmern empfangen hat (Uplink-Signale) in ihrer Frequenz verschoben werden, um diese anschließend über das Kabel an die Elektronik in dem Gebäude der Basisstation zu übertragen. In dem Gebäude der Basisstation dient ein Teil der dortigen Elektronik dazu, diese Signale wieder zu ihrer Ursprungsfrequenz hin zu verschieben, um diese dann der weiteren Signalverarbeitung zuzuführen.

Die US 2005/176458 A1 beschreibt den Aufbau eines CATV-Netzwerks, über das sowohl TV-Signale als auch Mobilfunksignale wie GSM oder UMTS übertragen werden können. Die Mobilfunksignale werden dabei heruntergemischt und belegen in dem CATV-Netzwerk ungenutzte Frequenzbereiche. Auf der Empfängerseite werden diese Mobilfunksignale wieder in ihre ursprünglichen Frequenzbereiche zurückgemischt, also hochgemischt.

Die GB 2 300 549 A beschreibt ein CATV-Verteilungsnetz, welches eine Schnittstelle zwischen einer Mobilfunk-Basisstation und einer Vielzahl von mobilen Endgeräten darstellt. Ein Signalprozessor, der an einem Kopfende des CATV-Netzwerks angeordnet ist, sorgt für eine erste Frequenzumwandlung zwischen einer Mobilfunkfrequenz und einer Übertragungsfrequenz im CATV-Netzwerk. Eine Vielzahl von Antennentreibern sind am entfernten Ende des CATV-Netzwerks angeordnet und sorgen für eine zweite Frequenzumsetzung zwischen der Übertragungsfrequenz im CATV-Netzwerk und der Mobilfunkfrequenz. An diese Antennentreiber sind Antennen gekoppelt, die mit mobilen Endgeräten kommunizieren.

Vor diesem Hintergrund ist es Aufgabe der Erfindung ein verbessertes System zum Senden und Empfangen von Mobilfunk-Signalen mittels einer stationären Antenne zu schaffen und bereit zu stellen.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Erfindungsgemäß umfasst die Frequenz-Umsetzeinrichtung zwei antennenseitige Downlink-Pfade, auf denen getrennt die über die zumindest beiden Antennen oder über die zumindest beiden Polarisationen der zumindest einen dual-polarisierten Antenne empfangenen Signale getrennt in einen unterschiedlichen Zwischenfrequenzbereich umsetzbar sind, die versetzt zueinander liegen.

Erfindungsgemäß wird weiterhin vorgeschlagen, dass beide Signalwege der beispielsweise dual-polarisierten Antenne erst verstärkt und danach mit zwei Frequenz-Umsetzern, deren beiden Oszillatoren an einen gemeinsamen Referenzoszillator angebunden sind, auf jeweils verschiedene Frequenzen umgesetzt werden. In den jeweiligen Endgeräten erfolgt dann eine Rückumsetzung unter Verwendung eines zweiten im Endgerät befindlichen Referenzoszillators oder auch unter Anbindung an den Referenzoszillator der Umsetzeinrichtung in der Antenne.

Nach einer Rückumsetzung werden beide MIMO-Signale direkt in einem entsprechenden MIMO-fähigen Receiver ausgewertet. Der entscheidende Vorteil liegt darin, dass damit die Phasen- und Amplitudenbeziehungen der beiden Signalwege zueinander synchron bleiben und die Kanalmatrix ausreichend stabil bleibt. Damit können aber auch mehrere Endteilnehmer an das Verteilnetz angeschlossen werden.

Die Erfindung schafft mit vergleichsweise einfachen Mitteln die Möglichkeit das Senden und Empfangen von Mobilfunk-Signalen insbesondere auch in Gebäuden deutlich zu verbessern oder teilweise sogar erst zu ermöglichen, wenn nämlich gebäudebedingt die von einer Mobilfunkstation ausgesendeten Sendesignale (Downlinks) an zumindest manchen Stellen im Gebäude nicht oder nur schlecht empfangen werden können. Das Gleiche gilt umgekehrt auch für den sogenannten Uplink, wenn nämlich durch ungünstige Gebäudebedingungen und bestehende Abschirmwirkungen die von einem Endgerät ausgesendeten Signale von der Mobilfunkstation nicht mehr empfangen werden können.

Dabei geht die erfindungsgemäße Einrichtung zum besseren Empfang und Senden von Mobilfunk-Signalen von einem Mobilfunk-Netz aus, welches zumindest in einer Funkrichtung, beispielsweise im Downlink-Betrieb (also im Sendebetrieb von der Basisstation zum Endteilnehmer) oder im Uplink-Betrieb (also im Übertragungsbereich vom Endteilnehmer zur Basisstation), entweder einen MIMO-Betrieb oder einen Diversity-Betrieb unterstützt oder ermöglicht, d.h. hierfür ausgelegt ist. Mit anderen Worten soll das System dafür geeignet und ausgelegt sein, dass die Sende- und Empfangssignale mittels mindestens eines Sende- und mindestens zwei Empfangsverstärkern oder umgekehrt zumindest mittels zweier Sende- und zumindest eines Empfangsverstärkers arbeiten.

Die erfindungsgemäße Lösung geht dabei ferner davon aus, dass in dem betreffenden Gebäude für eine breitbandige Übertragung von Signalen bereits Koaxialleitungen vorhanden sind. Für die Installation von Ein- oder Mehrfamilienhäuser werden häufig passive oder aktive, überwiegend koaxiale Verteilernetze genutzt. Damit werden beispielsweise Satellitensignale für den Fernseh- und/oder Radiobetrieb und/oder zum Empfang von terrestrisch ausgestalteten TV- oder Rundfunksignalen übertragen. Die Einspeisung der empfangenen Signale erfolgt zum einen über Satelliten-Antennen und zum anderen beispielsweise über eine in der Regel zusätzlich angeschlossene oder möglicherweise zuschaltbare terrestrische Antenne zum Empfang terrestrisch ausgestrahlter Programme. Über Low-Noise-Konverter (LNB-Konverter) sowie Multischalt-Einrichtungen (Matrix-Schaltung) kann dann über mehrere parallel verlegte Kabel eine Vielzahl von Teilnehmern angeschlossen werden. Bekannt sind aber ebenso Ein-KabelVerbindungen, die ebenfalls einen Empfang von teilnehmerseitig auswählbaren Programmen über eine einzige Koaxialleitung erlauben. Auch insoweit wird auf bekannte Lösungen verwiesen.

Ebenso bekannt sind koaxiale Verteilernetze in einem Gebäude, beispielsweise zum Empfang von kabelgebunden übertragenen Sendungen.

Insbesondere beim Satellitenempfang ist es bekannt, mehrere Teilnehmer mit verschiedenen TV-Satellitensignalen zu versorgen. Dazu sind Umsetzverfahren im Einsatz, welche in einer entsprechenden Matrix die jeweils vom Teilnehmer angeforderten Programme auf eine entsprechende Frequenz umsetzen.

Die erfindungsgemäße Lösung schlägt nunmehr vor, die zur Abwicklung einer Kommunikation über eine Basisstation empfangenen oder gesendeten Signale in eine Zwischenfrequenz umzusetzen und in dieser Zwischenfrequenz über ein gebäudeseitig vorgesehenes Verteilnetz zu übertragen. Insbesondere schlägt die Erfindung vor, Satelliten-Zwischenfrequenz-Verteilnetze nicht nur zur Übertragung von satellitengebundenen, d.h. über Satellit ausgestrahlten Programmen zu verwenden, sondern diese gebäudeseitigen Verteilnetze auch zur Übertragung von Mobilfunk-Signalen einzusetzen.

Dies eröffnet die Möglichkeit beispielsweise auch zum Empfang von neuen Mobilfunk-Standards, wie beispielsweise LTE, separat abgesetzte Antennen mit einem entsprechend hohen Antennengewinn einzusetzen, um dann die entsprechenden Daten über das hausgebundene koaxiale Verteilnetz zu den angeschlossenen Teilnehmern zu übertragen.

Dazu wird also erfindungsgemäß eine TEM-Leitung verwendet, also eine Leitung zur Übertragung einer transversal-elektromagnetischen Welle, insbesondere in Form einer Koaxialleitung, die bereits bei der Hausverteilung vorhanden ist.

Dabei schlägt die Erfindung ferner vor, die erfindungsgemäße Einrichtung zum Senden und Empfangen so aufzubauen, dass nicht nur die Nutzung eines Hausverteilnetzwerkes zur Übertragung von Signalen, insbesondere Signalen aus einer Luftschnittstelle mit zwei Polarisationen oder zwei Antennen über die erwähnte TEM-Leitung ermöglicht wird, sondern auch die geforderte Synchronität der Signale für einen Diversity- oder vor allem MIMO-Betrieb gewährleistet bleibt und den Bedingungen für die Einspeisung in Gemeinschaftsanlagen für den SAT- und den terrestrischen Empfang gerecht wird. Somit kann die erfindungsgemäße Lösung grundsätzlich auch zur Übertragung von derartigen Signalen für einen MIMO-Betrieb über eine Ein-Kabel-Strecke genutzt werden.

Grundsätzlich ist zwar für den Automotive-Bereich aus der DE 10 2004 062 000 A1 eine Antennen-Diversity-Einrichtung als bekannt zu entnehmen, die mehrere Antennen und eine antennenseitige Frequenzumsetzung umfasst.

Hierüber soll mindestens ein Empfangsband einer Antenne so umgesetzt werden, dass die Empfangsbänder der zumindest beiden Diversity-Antennen bezüglich des Frequenzspektrums nebeneinander zu liegen kommen und über ein gemeinsames Übertragungsmedium insbesondere in Form eines Koaxialkabels übertragen werden können. Dabei kann sowohl der zweite Pfad einer zweiten Antenne oder die zweite Polarisation einer dual polarisierten Antenne mittels einer Frequenzumsetzung auf ein und dasselbe Koaxialkabel umgesetzt werden. Dabei wird insbesondere vorgeschlagen, das Lokaloszillator-Signal des Empfängers zur Frequenzumsetzung zu nutzen.

Diese Lösung ist aber nur sehr eingeschränkt für die Einspeisung von MIMO-OFDM-Signalen in Gemeinschaftsanlagen geeignet. Bei OFDM-handelt es sich um ein orthogonales Frequenzmultiplexverfahren (Orthogonal Frequency Division Multiplexing), wobei es sich um ein Modulationsverfahren handelt, bei welchem mehr orthogonale Träger zur digitalen Datenübertragung verwendet werden. Jeder Träger wird zunächst separat moduliert. Je nachdem, welche der drei freien Parameter Frequenz, Amplitude und Phase dafür genutzt werden, trägt er pro Symbolschritt eine Information von einem oder mehreren Bit. Für den MIMO-Betrieb muss eine Kanalschätzung bzw. eine Bestimmung der Kanalmatrix erfolgen, auf deren Basis dann die gewählte Kombination bezüglich Phase und Amplitude der beiden Signale für die zwei - möglichst unkorrelierten - Ausbreitungs- und Antennenpfade vorgenommen wird. Dies bedingt aber eine gewisse Stabilität der Kanalmatrix. Sofern diese sich zu schnell ändert, kann der Algorithmus zur Auswahl der richtigen Phasen und Amplituden nicht folgen. Daher darf bei der Frequenzumsetzung absolut kein Frequenzfehler zwischen den umgesetzten MIMO-OFDM Signalen entstehen, wohingegen Laufzeitunterschiede zwischen den OFDM-Symbolen der beiden Mimo Kanäle zulässig sind, sofern diese innerhalb des auch bei LTE vorgesehenen Guard Intervals ("cyclic prefix") liegen. Wenn durch die Frequenzumsetzung der zweite Pfad in den Ausbreitungseigenschaften, insbesondere bezüglich der Phasenstabilität, in Relation zum ersten Pfad sehr schnell fluktuiert, führt dies somit zu einer Instabilität im MIMO-Betrieb. Zwar heben sich durch Verwendung eines gemeinsamen Oszillators (Empfängeroszillator) für den Umsetzer in der Antenne und in dem Empfänger diese Phasenfluktuationen und mögliche Frequenzabweichungen auf. Die Verwendung des Empfängeroszillators als gemeinsamen Oszillator ist aber allenfalls für Einzelempfangsanlagen geeignet und keinesfalls für Gemeinschaftsanlagen, da die Empfängeroszillatoren und damit auch die beiden umgesetzten MIMO-Signale nicht mehr für alle Empfänger in der Gemeinschaftsanlage synchronisiert sind. Zudem eignen sich übliche Gemeinschaftsanlagen für den SAT- und terrestrischen Empfang nicht für alle LTE-Bänder (LTE2600), weshalb die Umsetzung für einen Empfangspfad nicht immer ausreicht.

Weiterhin entstehen durch die Umsetzung nur eines OFDM MIMO-Signals grundsätzlich Laufzeitunterschiede zwischen den beiden OFDM-Symbolen, die sich jedoch nur dann beeinträchtigend auswirken, wenn diese größer als das vorhandene Guard-Intervall werden. Dasselbe Problem weisen auch alle anderen bekannten Verfahren zur Frequenzumsetzung auf, so dass eine Einkabellösung zum MIMO-Betrieb zur Übertragung in einer entsprechenden Hausverteilung bisher nicht realisiert wurde.

Eine bevorzugte Ausführungsform der Erfindung betrifft insbesondere die Pegelregelung am Einspeisepunkt und im Empfänger.

Die Erfindung wird nachfolgend anhand von Ausführungsbeispielen näher erläutert. Dabei zeigen im Einzelnen:
- Figur 1 :: eine schematische Darstellung der Erfindung anhand eines Hausverteilnetzes;
- Figur 2 :: eine schematische Darstellung der erfindungsgemäßen Lösung;
- Figur 3 :: eine Detaildarstellung einer Variante der erfindungsgemäßen Lösung; und
- Figur 4 :: eine weitere Variante der erfindungsgemäßen Lösung.

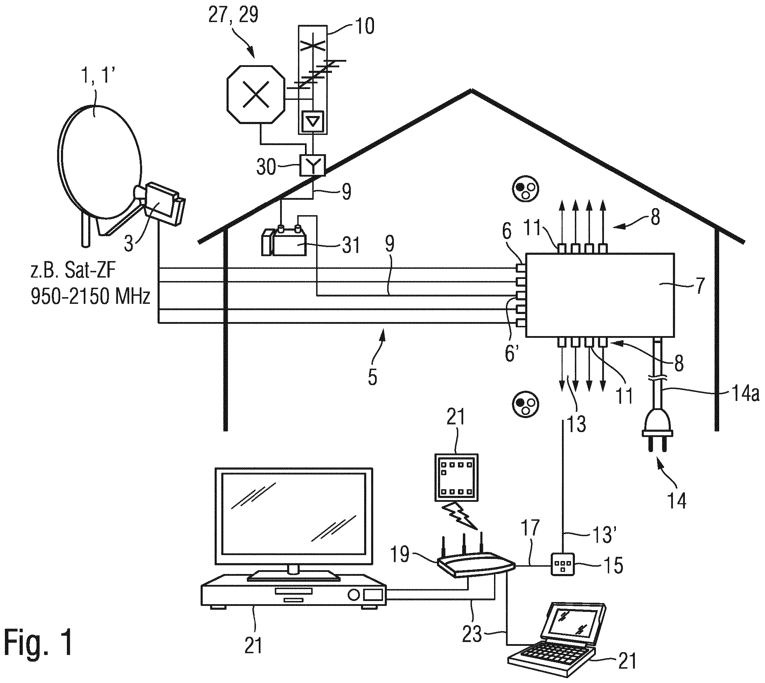

In Figur 1 ist eine schematische Darstellung einer Satellitenantenne 1 in Form einer Parabolantenne 1' wiedergegeben, worüber von einem Satelliten ausgestrahlte Programme empfangen und einer Konverterschaltung 3, einem so genannten Low-Noise-Konverter, zugeführt werden können, der teilweise auch als LNB bezeichnet wird.

Ist dieser Konverter 3 beispielsweise als üblicher Konverter aufgebaut, ist es möglich, sowohl die vertikal polarisierten elektromagnetischen Wellen als auch die horizontal polarisierten elektromagnetischen Wellen in zwei unterschiedlichen Frequenzbändern oder Frequenzbereichen zu empfangen, wobei die so vorfestgelegten vier Empfangsbereiche oder -ebenen über vier Konverter-Leitungen 5 einem nachgeschalteten Multischalter 7 (Matrix) zugeführt werden können. Dazu ist jede der vier Konverter-Leitungen 5 an einem eigenen Eingang 6 eines Multischalters 7 angeschlossen.

In den meisten Fällen ist noch ein weiterer Eingang 6' am Multischalter 7 vorgesehen, um hier eine terrestrische Antennenleitung 9 anschließen zu können, worüber über eine terrestrische Antenne 10 empfangene Programme in das Verteilnetz zusätzlich eingespeist werden können.

Der erläuterte Multischalter 7 (Matrix) umfasst üblicherweise an seinen Ausgangsseiten 8 entsprechende Anschlüsse 11, nämlich im gezeigten Ausführungsbeispiel für zwei mal vier zuschaltbare Teilnehmer. In Figur 1 ist dabei ferner dargestellt, dass die Matrix-Schaltung 7 nicht nur die erwähnten fünf Eingänge 6, 6' sondern auch (auf der gegenüberliegenden Seite) ebenfalls in entsprechender Anzahl Anschlüsse aufweist, so dass hier mehrere der gezeigten Matrix-Schaltungen 7 kaskadiert zugeschaltet werden können. Dadurch kann die Anzahl der zuschaltbaren Teilnehmer entsprechend erhöht werden, wie dies grundsätzlich bekannt ist. Im vorliegenden Fall ist nur ein Multischalter 7 (Matrix-Schaltung 7) gezeigt, wobei an den Ausgängen, (an denen eine oder weitere Matrix-Schaltungen kaskadiert zuschaltbar wären) ein Netzteil 14 an den entsprechenden nicht gezeigten Anschlussbuchsen angeschlossen ist. Dieses Netzteil 14 wird über eine Anschlussleitung 14a und einen zugehörigen Anschlussstecker an einem Stromnetz angeschlossen. Dadurch kann eine über das integrierte Netzteil erzeugte Gleichspannung in gewünschter Größe in Richtung Multischalter 7 und vor allem auch zu der Konverterschaltung 3 wie aber auch den nachfolgend noch erörterten elektronischen Baugruppen und Verstärkerstufen einer Kommunikationsanlage eingespeist werden. Bezüglich der Zuschaltung eines Netzteiles an einem Multischalter wird auf bekannte Lösungen verwiesen, beispielsweise die Vorveröffentlichung EP 1 076 457 B1.

Grundsätzlich umfasst die Multischalter-Anordnung 7 zumindest eine oder vorzugsweise mehrere (beispielsweise 4, 8 etc.) Teilnehmer-Anschlussleitungen 13. In einer vereinfachten Ausführungsform kann auch nur eine einzige Teilnehmer-Anschlussleitung 13' vorgesehen sein, beispielsweise auch deshalb, weil es sich um eine sogenannte Ein-Kabel-Lösung handelt, bei der mehrere Satellitenempfänger (Receiver) an einem einzigen Koaxialkabel 13' in Reihe zugeschaltet werden können (beispielsweise unter Verwendung von Durchgangssteckdosen, Abzweigern und/ oder Verteilern).

Im gezeigten Ausführungsbeispiel führt zumindest eine der näheren Teilnehmer-Anschlussleitungen 13 oder die nur einzig vorgesehene Ein-Kabel-Anschlussleitung 13' beispielsweise zu einer Verteiler- oder Multimedia-Dose 15, an welcher beispielsweise über ein Verbindungskabel 17 ein Router (oder Modem) als Empfänger 19 angeschlossen ist. An diesem Router oder Modem 19 können dann ein oder mehrere Teilnehmer oder Endgeräte 21 über geeignete Leitungen, in der Regel über ein Ethernet- oder USB-Kabel 23 etc. angeschlossen werden.

Als Endgeräte 21 sind beispielsweise ein Laptop, ein Tablet oder ein dem TV-Gerät zu- oder vorgeschalteter Receiver in Figur 1 angedeutet. Einschränkungen für die Nutzung bestimmter Geräte bestehen insoweit nicht. Gleichermaßen kann beispielsweise im Router oder über ein am Router angeschlossenes weiteres Gerät eine Wireless- oder WLAN-Verbindung beispielsweise zu den Geräten 21 aufgebaut werden.

Ferner ist in Figur 1 gezeigt, dass eine Luftschnittstelle 27 in Form einer Funknetz-Antenne 29 vorgesehen ist, die beispielsweise aus einer dualpolarisierten Antenne 29 besteht, worüber eine Mobilfunk-Kommunikation insbesondere mit einer Mobilfunk-Basisstation abgewickelt werden kann.

Die über die Luftschnittstelle 27 in Form der dualpolarisierten Funknetzantenne 29 empfangenen Signale werden - wie nachfolgend noch erörtert wird - entsprechend aufbereitet und in die Leitung 9 über ein Duplexfilter 30 eingespeist, in welcher auch die über die terrestrische Antenne 10 empfangenen TV- und Rundfunkprogramme eingespeist werden. Die hierüber wie über die dualpolarisierte Antenne empfangenen Signale werden dann gemeinsam über einen gegebenenfalls vorgesehenen Vorverstärker 31 verstärkt. In der zur Matrix-Schaltung 7 führenden, in der Regel als Koaxialleitung 9 ausgebildeten Leitung kann ferner noch eine Verstärkerstufe 31 vorgesehen sein.

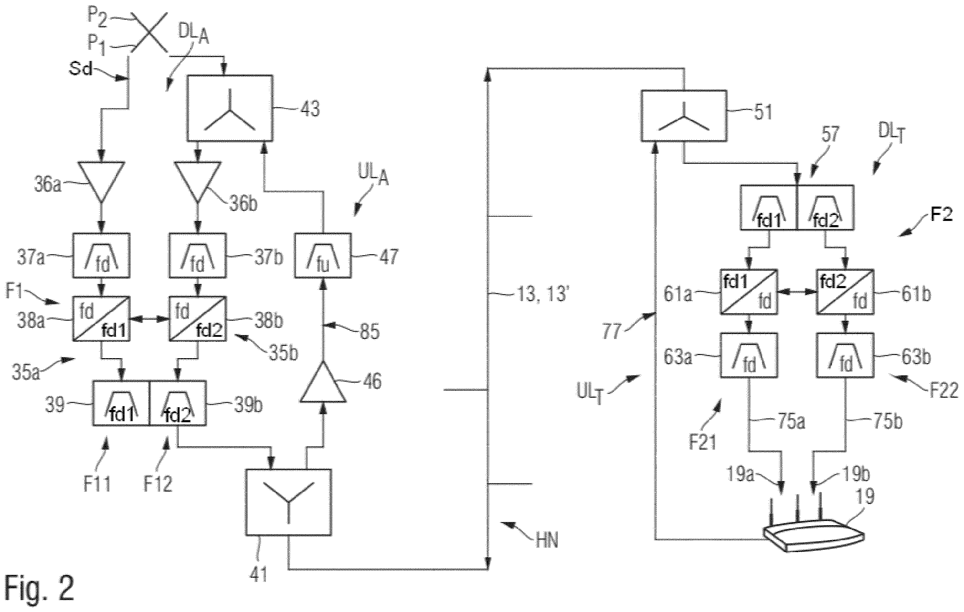

Der weitere Aufbau der erfindungsgemäßen Einrichtung zum Empfangen und Senden von Signalen für ein Funknetz wird nachfolgend anhand von Figur 2 im größeren Detail erläutert.

Figur 2 beschreibt dabei eine erste Frequenz-Umsetzeinrichtung F1 mit zwei parallelen Frequenz-Umsetzpfaden F11 und F12, die luftantennenseitig vorgesehen sind, sowie eine teilnehmerseitig an dem Hausverteilnetz HN zugeschaltete zweite Frequenz-Umsetzeinrichtung, die nachfolgend auch als Frequenz-Rückumsetzeinrichtung F2 bezeichnet wird. Die Frequenz-Umsetzeinrichtung F1 mit den beiden erwähnten Frequenz-Umsetzpfaden F11 und F12 bilden dabei den antennenseitigen Downlink-Pfad DLA, und die Frequenz-Rückumsetzeinrichtung F2 mit den nachfolgend noch erörterten beiden Frequenz-Rückumsetzpfaden F21 und F22 bilden den empfängerseitigen Downlink-Pfad DLT.

Die erste Frequenz-Umsetzeinrichtung F1 kann beispielsweise der Luftantenne 27 unmittelbar nachgeschaltet oder in dieser integriert sein. Im gezeigten Ausführungsbeispiel besteht die Luftantenne 27 beispielsweise nicht aus zwei getrennten Funknetz-Antennen 29, sondern aus einer dualpolarisierten Funknetz-Antenne 29, die in zwei senkrecht zueinander stehenden Polarisationsebenen P1 und P2 senden und/oder empfangen kann. Die beispielsweise über eine Polarisationsebene P1 empfangenen Signale Sd können dabei einem ersten Downlink-Pfad 35a, der nachfolgend teilweise auch als DLA bezeichnet wird, unter Verwendung eines Vorverstärkers 36a, einem nachgeschalteten Bandpassfilter 37a, einem ersten Frequenz-Umsetzer 38a zugeführt werden, indem die eingespeiste Empfangs-Frequenz fd in eine erste Sat-Zwischenfrequenz fd1 in dem ersten Frequenz-Umsetzpfad F11 umgesetzt werden kann.

Die entsprechend umgesetzten Empfangssignale in dem Frequenzband fd1 werden dann über eine Frequenzweiche 39 sowie einen nachfolgenden Duplexfilter 41 in das Hausverteilnetz HN eingespeist, was aus mehreren oder zumindest einer Übertragungsleitung 13, 13' besteht oder dieses umfasst.

Die über die andere Polarisationsebene P2 empfangenen Signale Sd der Luftschnittstelle 27 werden über einen antennenseitigen Duplexfilter 43 in einen zweiten Downlink-Pfad 35b eingespeist (DLA), der ähnlich wie der erste Pfad 35a aufgebaut ist, nämlich mit einem Vorverstärker 36b, einem nachfolgenden Bandpassfilter 37b, einem darauf folgenden Frequenz-Umsetzer 38b und einem weiteren Bandpassfilter 39b. Die hierüber empfangenen und aufbereiteten und frequenzumgesetzten Signale werden dann ebenfalls wiederum über einen weiteren Eingang der Frequenzweiche 39 dem gleichen Anschluss des Duplexfilters 41 zugeführt und dann in das Hausverteilnetz HN eingespeist.

Die Besonderheit ist dabei, dass im gezeigten Ausführungsbeispiel die von der beispielsweise dualpolarisierten Antenne 29 für beide Polarisationen erhaltenen und von einer Mobilfunkbasisstation ausgestrahlten Sendesignale (Downlink-Betrieb) empfangenen Signale erst verstärkt und danach mit den beiden Frequenz-Umsetzern 38a und 38b auf verschiedene Frequenzen fd1 und fd2 umgesetzt werden, wobei die Oszillatoren der beiden Frequenz-Umsetzer 38a und 38b an einen gemeinsamen Referenzoszillator angebunden sind, worauf noch später eingegangen wird.

Auf der Teilnehmerseite schließt sich an das eine oder mehrere Übertragungskabel 13, 13' umfassende Hausverteilnetz HN eingangsseitig wiederum ein Duplexfilter 51 an, worüber der hausverteilnetzseitige Anschluss des Duplexfilters an seinem einen empfangsgeräteseitigen Anschluss mit dem teilnehmerseitigen Uplink-Pfad (Sende-Pfad) ULT und an seinem zweiten empfangsgeräteseitigen Anschluss mit zwei empfängerseitigen parallelen Downlink-Pfaden DLT, also zwei empfängerseitigen Empfangs-Pfaden 75a, 75b, verbunden ist, die die zweite Frequenz-Umsetzeinrichtung F2 in Form der erwähnten Frequenz-Rückumsetzeinrichtung F2 mit den beiden parallelen Frequenz-Rückumsetzpfaden F21 und F22 umfasst.

Dem einen teilnehmerseitigen Duplexanschluss ist eine Frequenzweiche 57 nachgeschaltet, worüber die beiden in die ZF-Frequenzbereiche, also insbesondere im gezeigten Ausführungsbeispiel in die Sat-Zwischenfrequenzbereiche umgesetzten Frequenzbänder fd1 und fd2 entsprechend auf die beiden Frequenz-Rückumsetzpfade F21 und F22 aufgespalten werden, wobei in jedem der beiden Frequenz-Rückumsetzpfade F21 und F22 jeweils ein Frequenz-Rückumsetzer 61a bzw. 61b geschaltet ist, worüber die in der Satelliten-Zwischenfrequenzebene umgesetzten Frequenzbänder fd1 und fd2 in die Empfangsfrequenz fd rückumgesetzt und über jeweils ein nachfolgendes Bandpassfilter 63a bzw. 63b einem Empfangsgerät 19 beispielsweise in Form des Routers zugeführt werden, d.h. gegebenenfalls hier an zwei Anschlüssen 19a bzw. 19b am Router anstehen. Bevorzugt kann die vorstehend erläuterte zweite Frequenz-Umsetzeinrichtung F2, die auch Frequenz-Rückumsetzeinrichtung F2 genannt wird, mit den beiden Frequenz-Rückumsetzpfaden F21 und F22 in dem Router oder Modem 19 selbst untergebracht sein.

Der umgekehrte Weg vom Empfänger oder Router zur Luftantenne umfasst einen mit dem Bezugszeichen 77 gekennzeichneten empfänger- oder teilnehmerseitigen Uplink-Pfad ULT vom Empfänger 19, beispielsweise in Form des erwähnten Routers oder Modems, zu dem zweiten empfängerseitigen Anschluss am Duplexfilter 51, wobei die hierüber vom Teilnehmer oder Empfänger eingespeisten Sendesignale Su dann über das teilnehmerseitige Duplexfilter 51 und das Hausverteilnetz HN dem mit dem Bezugszeichen 85 gekennzeichneten antennenseitigen Uplink-Pfad ULA zugeführt werden, der parallel zu den beiden Frequenz-Umsetzpfaden F11 und F12 zwischen zwei entsprechenden Anschlüssen zwischen den beiden Duplexfiltern 41 und 43 verläuft und dann über den antennenseitigen Anschluss des Duplexfilters 43 zur Luftantenne 27 führt. Der antennenseitige Uplink-Pfad ULA kann dabei ebenfalls noch eine Verstärkerstufe 46 in Uplink-Richtung und ein nachgeschaltetes Bandfilter 47 umfassen. Somit sind also der teilnehmerseitige Uplink-Pfad ULT und die Frequenz-Rückumsetzeinrichtung F2 (mit den beiden Frequenz-Rückumsetzpfaden 75a, 75b) sowie der antennenseitige Uplink-Pfad ULA und die Frequenz-Umsetzeinrichtung F1 (mit den beiden Frequenz-Umsetzpfaden 35a und 35b) jeweils parallel geschaltet.

Über den teilnehmerseitigen oder empfangsgeräteseitigen Uplink-Pfad 77, das Hausverteilnetz HN und den antennenseitigen Uplink-Pfad 85 werden also die vom Empfänger 19 oder Teilnehmer 21 kommenden Sendesignale Su der Funknetz-Antenne 29, d.h. im gezeigten Ausführungsbeispiel dem in der Polarisationsebene P2 strahlenden Strahler zugeführt. In diesem Uplink-Pfad findet jedoch im Gegensatz zum Downlink-Übertragungsweg keine Frequenzumsetzung oder Frequenzrückumsetzung statt.

Die über die erwähnte Luftschnittstelle 27 in Form der Funknetz-Antenne 29 (bevorzugt in Form einer dualpolarisierten Antenne) empfangenen Signale durchlaufen also jeweils einen Vorverstärker (LNA) 36a, 36b, wahlweise mit oder ohne einer Verstärkungsreglung in Abhängigkeit des Empfangspegels. Die nachfolgende Frequenzumsetzung besteht dabei aus den beiden Frequenz-Umsetzerpfaden F11 und F12, welche typischerweise in zwei Umsetzschritten in jeweils einen Zwischenfrequenzbereich ZF umsetzen, welcher für den digitalen Rundfunkempfang (besonders DVB-S/S2 und DVB-T, sehr selten DAB und DVB-H) im Verteilnetz (SAT-ZF, Frequenzbereiche 174-230MHz und 470-790MHz DVB-T) nicht benötigt wird. Bevorzugt wird der Frequenzbereich für die Sonderkanäle, die nur für die Übertragung in Kabelnetzen nicht aber in Einfamilien- oder kleineren Mehrfamilienhäusern mit SAT- und terrestrischer Empfangsantenne genutzt werden, verwendet. Die betreffenden Frequenzbereiche liegen z.B. zwischen 110 und 174MHz (unterer Sonderkanalbereich), 230-300MHz (oberer Sonderkanalbereich) und 300-470MHz (erweiterter Sonderkanalbereich). In einer konkreten Ausführung kann beispielsweise der Empfangsfrequenzbereich (Downlink) der über die eine Polarisationsebene P1 von 792 MHz bis 822 MHz auf einen Frequenzbereich von 111 MHz bis 141 MHz und die über die zweite Polarisationsebene P2 empfangenen Signale auf den Frequenzbereich von 142 MHz bis 172 MHz abgebildet werden. Da derzeit für den Uplink kein MIMO-Betrieb gefordert wird, bezieht sich diese Ausführung nur auf den Downlink, aber grundsätzlich kann diese Anordnung nach dem gleichen Prinzip auch für den Uplink erweitert werden.

Wie erläutert, kann dann eine entsprechende Rückumsetzung auf den originalen Frequenzbereich fd beim Endteilnehmer erfolgen, wobei die Signale dann an zwei Anschlüssen zur Verfügung gestellt werden und in das MIMOfähige Empfangsmodul (z.B. Router 19) über das erwähnte Hausverteilnetz eingespeist werden.

Anhand von Figur 2 ist bereits angedeutet, dass die beiden Frequenz-Umsetzer 38a und 38b in den beiden antennenseitigen Frequenz-Umsetzpfaden F11 und F12 (also den Downlink-Pfaden DLA) auf der Antennenseite wie die beiden Frequenz-Rückumsetzer 61a und 61b in den beiden Frequenz-Rückumsetzpfaden F21 und F22 in dem Downlink-Pfad DLT auf der Teilnehmerseite entsprechend abgestimmt, insbesondere entsprechend synchronisiert sind, beispielsweise durch Verwendung eines gemeinsamen Referenzoszillators. Das Gleiche gilt auch für den weiteren Referenzoszillator im Endgerät 19, beispielsweise im Router 19'.

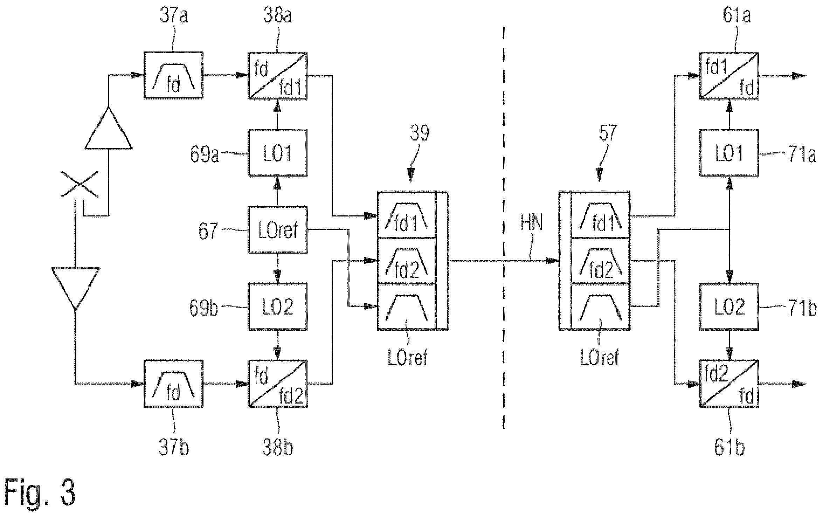

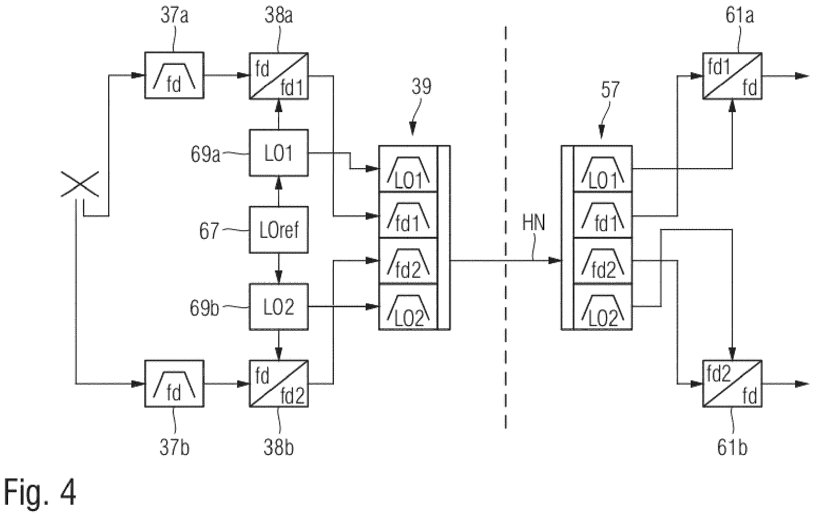

Mögliche Umsetz-Varianten werden nachfolgend noch im größeren Detail anhand von Figuren 3 und 4 erläutert.

In Figur 3 ist auch der erwähnte antennenseitige Referenzoszillator 67 gezeigt, worüber zwei Lokaloszillatoren 69a und 69b zur Ansteuerung der Frequenz-Umsetzer 38a und 38b angesteuert werden (die üblicherweise aus Mischer bestehen oder diese umfassen).

Dabei ist in dieser Ausführungsform ferner vorgesehen, dass über die Weiche 39 nicht nur die beiden über die beiden Polarisationen P1 und P2 empfangenen und in zwei versetzt zueinander liegenden Frequenzbänder frequenzumgesetzte Bereiche fd1 und fd2, sondern auch die Referenzoszillator-Frequenz LOref in das Hausverteilnetz HN eingespeist wird, wobei die Referenzoszillator-Frequenz LOref zu den beiden eingespeisten übertragenen Frequenzbändern fd1 und fd2 ebenfalls versetzt ist.

Auf der Teilnehmerseite wird über die erwähnte weitere Weiche 57 eine entsprechende Frequenz-Aufteilung vorgenommen, bei der, wie erwähnt, die beiden versetzt zueinander liegenden in die Sat-Zwischenfrequenzebene umgesetzten ZF-Frequenzbänder fd1 und fd2 über die beiden Frequenz-Rückumsetzer 61a und 61b in die Empfangsfrequenz fd rückumgesetzt werden. Dazu könnte ein teilnehmerseitig, beispielsweise im Endgerät 19 (z.B. Router) vorgesehener Referenzoszillator verwendet werden. In diesem Falle werden zwar Frequenz- und Phasenfehler im Hin- und Rückumsetzweg entstehen, wobei allerdings durch die Anbindung an einen Referenzoszillator für beide Zweige sich die Fehler in Frequenz und Phase nach der Rückumsetzung für beide Zweige synchron auswirken und von daher sich gegenseitig kompensieren.

Im gezeigten Ausführungsbeispiel gemäß Figur 3 wird jedoch ein anderer Weg vorgeschlagen, bei welchem die Referenzoszillator-Frequenz LOref in der antennenseitigen Frequenz-Umsetzeinrichtung F1 nunmehr ebenfalls wiederum zur Ansteuerung der beiden Lokaloszillatoren 71a und 71b im empfänger- oder teilnehmerseitigen Downlink-Pfad DLT verwendet wird, die die entsprechenden Frequenz-Rückumsetzer 61a und 61b zur Rückübersetzung der übertragenen Frequenzen fd1 und fd2 in die Empfangsfrequenz fd steuert.

Nach der geschilderten Frequenz-Rückumsetzung in den Empfangs-Frequenzbereich fd werden also beide MIMO-Signale direkt in einem entsprechenden MIMO-fähigen Receiver ausgewertet, wodurch die Phasen- und die Amplitudenbeziehung der beiden Signalwege zueinander synchron bleiben und die Kanalmatrix ausreichend stabil bleibt. Dadurch können auch weiteren Endteilnehmer an das Verteilnetz angeschlossen werden.

Bei der Variante gemäß Figur 3 wird also die Frequenz-Synchronisation zwischen den umgesetzten LTE-MIMO-Kanälen durch Verwendung eines gemeinsamen Referenzoszillators sichergestellt. Dabei werden Frequenz- und Phasenfehler des Referenzoszillators nach der Umsetzung nach der Antenne und nach der Rückumsetzung im Empfänger vollständig eliminiert. Dadurch, dass alle Empfänger in der Gemeinschaftsanlage den Referenzoszillator der Umsetzeinrichtung in der Antenne verwenden, ist die erforderliche Synchronität zwischen den beiden MIMO OFDM Kanälen auch für alle Empfänger in einer Gemeinschaftsanlage gegeben. Zudem werden durch die Umsetzung beider MIMO OFDM-Signale die Laufzeitunterschiede zwischen den beiden OFDM-Symbolen entsprechend minimiert, welches die Reserven gegenüber den durch das Guard-Intervall vorgegebenen Grenzwert minimiert.

Bei der Variante gemäß Figur 4 erfolgt die Frequenzsynchronisation zwischen den umgesetzten LTE-MIMO-Kanälen durch die antennenseitigen Lokaloszillatoren 69a und 69b, deren Lokaloszillatorfrequenzen LO1 und LO2 ebenfalls über die Weichen 39 und 57 der teilnehmerseitigen Frequenz-Rückumsetzeinrichtung F2 zugeführt werden. Teilnehmerseitig wird über die dortige Weiche 57 wiederum eine Frequenz-Aufspaltung vorgenommen, so dass die Lokaloszillatoren die dortigen teilnehmerseitigen Frequenz-Rückumsetzer 61a, 61b direkt ansteuern können.

Das Ausführungsbeispiel gemäß Figur 4 beschreibt also eine Variante, bei welcher die Oszillatoren in der Frequenz-Umsetzeinrichtung F1 (nach der Antenne und vor dem Hausverteilnetz HN) auch auf der Empfängerseite in der Frequenz-Rückumsetzeinrichtung F2 benutzt werden. Dieses Prinzip ist qualitativ dem anhand von Figur 3 gezeigten Prinzip vorzuziehen, da keine Restfehler aufgrund unterschiedlicher Lokaloszillatoren in der antennenseitigen Frequenz-Umsetzeinrichtung F1 und der teilnehmerseitigen Frequenz-Rückumsetzeinrichtung F2 im Empfänger verursacht sind, sondern gegebenenfalls ein Vorteil bei Phasenrauschen gegeben ist. Zudem wird durch diese Variante auch noch eine einfachere Lösung für den Empfänger, also dem Teilnehmer 21 eröffnet. Nachteilig gegenüber der anhand von Figur 3 gezeigten Lösung kann allerdings sein, dass es gegebenenfalls schwierig ist, für die Übertragung der Frequenzen der Frequenzumsetz-Oszillatoren zusätzliche Lücken im Übertragungsfrequenzbereich zu finden.

Ferner kann im Rahmen der Erfindung auch noch eine Vorteile aufweisende Pegelregelung am Einspeisepunkt und am Empfänger umgesetzt werden.

Diese Pegelregelung bzw. -anpassung bewirkt, dass der begrenzte Dynamikbereich des Verteilnetzes, welcher beispielsweise durch die begrenzte Schirmdämpfung gegeben ist, entsprechend ausgenutzt wird. Bei begrenzter zur Verfügung stehender Bandbreite kann auch eine Umsetzung eines eingeschränkten Frequenzbandes, beispielsweise nur eines Netzbetreibers erfolgen. Eine vorteilhafte Möglichkeit bei Übertragung eines Synchronisationssignals basierend auf dem Referenzoszillator an der Antenne ist die Nutzung des Pegels des Signals zur Bestimmung der Dämpfung des Verteilnetzwerkes und damit zur Verstärkungsregelung im Empfänger.

Ferner wird angemerkt, dass die erläuterte Einrichtung so aufgebaut sein kann, dass die Verbindung vom Empfänger 19 zur Luftantenne 27 über einen empfängerseitigen Uplink-Pfad ULT, 77, das Hausverteilnetz HN und einen antennenseitigen Uplink-Pfad ULA, 85 besteht, wobei auf diesem Weg, vorzugsweise in dem antennenseitigen Uplink-Pfad ULA; 85 ein Verstärker 46 vorgesehen ist, der eine Verstärkungsregelung umfasst, derart, dass die zulässige äquivalente isotropische Strahlungsleistung (EIRP) nicht überschritten wird.

## Patentansprüche

1. Einrichtung zum Empfangen und Senden von Signalen für ein Funknetz, mit folgenden Merkmalen:
- mit einer Luftschnittstelle (27) mit einer MIMO-Antenne (29) zumindest in Form einer dualpolarisierten Antenne oder in Form von zwei Antennen zur Durchführung eines MIMO-Betriebes zumindest in einer Funkrichtung, d.h. im Downlink- oder im Uplink-Betrieb,
- mit zumindest einem Sende-Verstärker (46) und mit zumindest zwei Empfangsverstärkern (36a, 36b),
- der zumindest eine Sendeverstärker (46) und die zumindest beiden Empfangsverstärker (36a, 36b) sind mit einem Hausverteilnetz (HN) verbunden, in welches über die Luftschnittstelle (27) erhaltene Empfangssignale eingespeist sind und über das Hausverteilnetz (HN) erhaltene Sendesignale der Luftschnittstelle zuführbar sind;
- zwischen der Luftschnittstelle (27) und dem Hausverteilnetz (HN) ist eine antennenseitige Frequenz-Umsetzeinrichtung (F1) vorgesehen,
- die antennenseitige Frequenz-Umsetzeinrichtung (F1) umfasst zumindest einen Frequenz-Umsetzer (38a, 38b), worüber
a) die über die zumindest eine Polarisation (P1 oder P2) der dualpolarisierten Antenne (29) erhaltenen Empfangssignale (Sd); oder
b) die über die zumindest eine der zumindest beiden Antennen (29) erhaltenen Empfangssignale (Sd) mit einer Sendefrequenz (fd) in einen im Hausverteilnetz (HN) freien und/oder ungenutzten ZwischenFrequenzbereich (fd1, fd2) umsetzbar sind,
- es ist zumindest eine empfängerseitige Frequenz-Rückumsetzeinrichtung (F2) zwischen dem Hausverteilnetz (HN) und einem Empfänger (19) vorgesehen,
- die empfängerseitige Frequenz-Rückumsetzeinrichtung (F2) ist so aufgebaut, dass hierüber eine Frequenz-Rückumsetzung der in den freien und/oder ungenutzten Zwischen-Frequenzbereich umgesetzten Frequenzen (fd1, fd2) in den empfangenen Frequenzbereich (fd) rückführbar ist,
- die Frequenz-Umsetzeinrichtung (F1) umfasst zwei antennenseitige Downlink-Pfade (DLA; 35a, 35b), auf denen die über die zumindest beiden Antennen oder über die zumindest beiden Polarisationen (P1, P2) der zumindest einen dualpolarisierten Antenne (29) empfangenen Signale (Sd) getrennt in jeweils unterschiedliche Zwischenfrequenzbereiche (fd1, fd2) umsetzbar sind, die versetzt zueinander liegen, und
- die beiden antennenseitigen Downlink-Pfade (DLA; 35a, 35b) umfassen jeweils einen Frequenz-Umsetzer (38a, 38b) der antennenseitigen Frequenz-Umsetzeinrichtung (Fl), wobei den Frequenz-Umsetzern (38a, 38b) jeweils ein Lokaloszillator (LO1, LO2) für die Frequenzumsetzung zugeordnet ist und die beiden Lokaloszillatoren (LO1, LO2) mittels eines gemeinsamen Referenzoszillators (67) miteinander synchronisiert sind.

2. Einrichtung nach Anspruch 1, **dadurch gekennzeichnet, dass** die Frequenz-Umsetzeinrichtung (F1) an oder in der Luftschnittstelle (27) oder der zugehörigen Antenne (29) und/oder dass die empfängerseitige Frequenz-Rückumsetzeinrichtung (F2) für die Frequenz-Rückumsetzung beim oder im Empfänger (19) vorgesehen ist.

3. Einrichtung nach einem der vorherigen Ansprüche, **dadurch gekennzeichnet, dass** in der empfängerseitigen Frequenz-Rückumsetzeinrichtung (F2) zwei empfängerseitige Downlink-Pfade (DLT; 75a, 75b) vorgesehen sind, worüber die über eine Weiche (57) aufgespaltenen versetzt zueinander liegenden Zwischenfrequenzbereiche (fd1 fd2) über jeweils einen in jedem der beiden empfängerseitigen Downlink-Pfade (DLA; 75a, 75b) vorgesehenen Frequenz-Rückumsetzer (61a, 61b) in die Empfangsfrequenz (fd) rückumsetzbar ist.

4. Einrichtung nach einem der vorherigen Ansprüche, **dadurch gekennzeichnet, dass** die Einrichtung so aufgebaut ist, dass neben den Zwischen-Frequenzbereichen (fd1, fd2) auch das dazu versetzt liegende, vom Referenzoszillator (67) erzeugte Referenzoszillator-Signal (LO-ref) in das Hausverteilnetz (HN) eingespeist wird, worüber in dem empfängerseitigen Downlink-Pfad (DLT, 75a, 75b) die dort vorgesehenen Lokaloszillatoren (71a, 71b) zur Ansteuerung der Frequenz-Rückumsetzer (61a, 61b) ansteuerbar sind.

5. Einrichtung nach einem der Ansprüche 1 bis 3, **dadurch gekennzeichnet, dass** die antennenseitige Frequenz-Umsetzeinrichtung (F1) so aufgebaut ist, dass die beiden für die beiden Frequenz-Umsetzer (38a, 38b) vorgesehenen Lokaloszillatoren (69a, 69b) jeweils eine Lokaloszillator-Frequenz (fLO1, fLO2) erzeugen, welches in das Hausverteilnetz (HN) eingespeist wird, wobei die empfängerseitige Frequenz-Rückumsetzeinrichtung (F2) so aufgebaut ist, dass mittels dieser beiden LokaloszillatorFrequenzen (fLO1, fLO2) zwei Lokaloszillatoren (71a, 71b) betrieben werden, worüber die zugeordneten Frequenz-Rückumsetzer (61a, 61b) in den beiden empfängerseitigen Downlink-Pfaden (75a, 75b) angesteuert werden.

6. Einrichtung nach einem der Ansprüche 1 bis 3, **dadurch gekennzeichnet, dass** in dem Empfänger (19) ein Referenzoszillator zur Ansteuerung der beiden Lokaloszillatoren (71a, 71b) zum Betrieb der beiden Frequenz-Rückumsetzer (61a, 61b) vorgesehen ist.

7. Einrichtung nach einem der Ansprüche 1 bis 6, **dadurch gekennzeichnet, dass** eine Pegelregelung zur Regelung des Signal-Pegels des Empfangssignals (Sd) vorgesehen ist, vorzugsweise am Einspeisepunkt im Empfänger (19).

8. Einrichtung nach einem der Ansprüche 1 bis 7, **dadurch gekennzeichnet, dass** zumindest in den beiden antennenseitigen Downlink-Pfaden (DLA; 35a, 35b) den dort vorgesehenen Frequenz-Umsetzern (38a, 38b) jeweils einer der Empfangsverstärker (36a, 36b) vorgeschaltet ist.

9. Einrichtung nach Anspruch 8 und Anspruch 4, **dadurch gekennzeichnet, dass** der Empfänger (19) so aufgebaut ist, dass in ihm eine Information bezüglich der Stärke des in das Hausverteilnetz (HN) von der antennenseitigen Frequenz-Umsetzeinrichtung (F1) eingespeisten Referenzoszillator-Signals (LOref) abgespeichert ist, und dass eine Dämpfungsmess-Einrichtung für das empfangene Referenzoszillator-Signal (LOref) in dem Empfänger (19) vorgesehen ist, worüber den Verstärkern (36a, 36b) ein Regelsignal für die Verstärkungsregelung zuführbar ist.

10. Einrichtung nach Anspruch 9, **dadurch gekennzeichnet, dass** die Verbindung vom Empfänger (19) zur Luftantenne (27) über einen empfängerseitigen Uplink-Pfad (ULT, 77), das Hausverteilnetz (HN) und einen antennenseitigen Uplink-Pfad (ULA, 85) besteht, wobei auf diesem Weg, vorzugsweise in dem antennenseitigen Uplink-Pfad (ULA; 85) ein Verstärker (46) vorgesehen ist, der eine Verstärkungsregelung umfasst, derart, dass die zulässige äquivalente isotropische Strahlungsleistung (EIRP) nicht überschritten wird.

11. Einrichtung nach einem der Ansprüche 1 bis 10, **dadurch gekennzeichnet, dass** am Ausgang der antennenseitigen Frequenz-Umsetzeinrichtung (F1) vor Einspeisung in das Hausverteilnetz (HN) eine Frequenz-Weiche (39) zur Einspeisung der in unterschiedlichen Zwischen-Frequenzbereichen (fd1, fd2) umgesetzten Empfangssignale vorgesehen ist, und/oder dass eine weitere Frequenz-Weiche (57) eingangsseitig in der empfängerseitigen Frequenz-Rückumsetzeinrichtung (F2) vorgesehen ist, worüber die in die unterschiedlichen Zwischenfrequenzbereiche (fd1, fd2) umgesetzten Empfangssignale auf zwei empfangsseitige Downlink-Pfade (DLT) aufspaltbar sind.

12. Einrichtung nach einem der Ansprüche 1 bis 11, **dadurch gekennzeichnet, dass** die antennenseitige Frequenz-Umsetzeinrichtung (F1) im Bereich der Luftschnittstelle (27) oder in der Antenne (29) und/oder dass die empfängerseitige Frequenz-Rückumsetzeinrichtung (F2) im Empfänger (19) integriert ist bzw. sind.

## Claims

1. Device for receiving and sending signals for a radio network, having the following features:
- having an air interface (27) with an MIMO antenna (29) at least in the form of a dual-polarised antenna or in the form of two antennae for carrying out an MIMO operation at least in a radio device, i.e. in the downlink or in the uplink operation,
- having at least one sending amplifier (46) and having at least two receiving amplifiers (36a, 36b),
- the at least one sending amplifier (46) and the at least two receiving amplifiers (36a, 36b) are connected to a house distribution network (HN) in which receipt signals obtained via the air interface (27) are fed in, and sending signals obtained via the house distribution network (HN) can be supplied to the air interface;
- a frequency conversion device (F1) on the side of the antenna is provided between the air interface (27) and the house distribution network (HN),
- the frequency conversion device (F1) on the antenna side comprises at least one frequency converter (38a), 38b), by means of which
a) the receipt signals (Sd) obtained via the at least one polarisation (P1 or P2) of the dual-polarised antenna (29); or
b) the receipt signals (Sd) obtained via the at least one of the at least two antennae (29) with a sending frequency (fd) in an intermediary range (fd1, fd2) free and/or unused in the house distribution network (HN) can be converted,
- at least one frequency back-conversion device (F2) on the side of the receiver is provided between the house distribution network (HN) and a receiver (19),
- the frequency back-conversion device (F2) on the receiver side is constructed in such a way that a frequency back-conversion of the frequencies (fd1, fd2) converted in the free and/or unused intermediary frequency range can be fed back via this into the received frequency range (fd),
- the frequency conversion device (F1) comprises two downlink paths (DLA; 35a, 35b) on the antenna side on which the signals (Sd) received via the at least two antennae or via the at least two polarisations (P1, P2) of the at least one dual-polarised antenna (29) can be converted separately in each case into different intermediary frequency ranges (fd1, fd2) which lie offset in relation to one another, and
- the two downlink paths (DLA; 35a, 35b) on the antenna side each comprise a frequency converter (38a, 38b) of the frequency conversion device (F1) on the antenna side, wherein a local oscillator (LO1, LO2) is respectively allocated to the frequency converters (38a, 38b) for the frequency conversion, and
the two local oscillators (LO1, LO2) are synchronised with each other by means of a common reference oscillator (67).

2. Device according to claim 1, **characterised in that** the frequency conversion device (F1) is provided on or in the air interface (27) or the corresponding antenna (29) and/or the frequency back-conversion device (F2) on the receiver side is provided for the frequency back-conversion with or in the receiver (19).

3. Device according to one of the preceding claims, **characterised in that** two downlink paths (DLT; 75a, 75b) on the receiver side are provided in the frequency back-conversion device (F2) on the receiver side, by means of which the intermediary frequency ranges (fd1, fd2) lying offset in relation to one another and split via a turnout (57) can be back-converted into the receipt frequency (fd) respectively via a frequency back-converter (61a, 61b) provided in each of the two downlink paths (DLA; 75a, 75b) on the receiver side.

4. Device according to one of the preceding claims, **characterised in that** the device is constructed in such a way that, along with the intermediary frequency ranges (fd1, fd2), the reference oscillator signal (LO-ref) lying offset in relation to them and generated by the reference oscillator (67) is fed into the house distribution network (HN), by means of which, in the downlink path (DLT, 75a, 75b) on the receiver side, the local oscillators (71a, 71b) provided there can be controlled to control the frequency back-converter (61a, 61b).

5. Device according to one of claims 1 to 3, **characterised in that** the frequency conversion device (F1) on the antenna side is constructed in such a way that the two local oscillators (69a, 69b) provided for the two frequency converters (38a, 38b) each generate a local oscillator frequency (fLO1, fL02), which is fed into the house distribution network (HN), wherein the frequency back-conversion device (F2) on the receiver side is constructed in such a way that two local oscillators (71a, 71b) are operated by means of these two local oscillator frequencies (fLO1, fL02), by means of which the allocated frequency back-converters (61a, 61b) are controlled in the two downlink paths (75a, 75b) on the receiver side.

6. Device according to one of claims 1 to 3, **characterised in that,** in the receiver (19), a reference oscillator for controlling the two local oscillators (71a, 71b) is provided to operate the two frequency back-converters (61a, 61b).

7. Device according to one of claims 1 to 6, **characterised in that** a level control is provided for controlling the signal level of the receipt signal (Sd), preferably at the feed-in point in the receiver (19).

8. Device according to one of claims 1 to 7, **characterised in that,** at least in the two downlink paths (DLA; 35a, 35b) on the antenna side, in each case one of the receipt amplifiers (36a, 36b) is switched in advance of the frequency converters (38a, 38b) provided there.

9. Device according to claim 8 and claim 4, **characterised in that** the receiver (19) is constructed in such a way that a piece of information relating to the strength of the reference oscillator signal (LOref) fed into the house distribution network (HN) by the frequency conversion device (F1) on the antenna side is stored in it, and a damping measuring device for the received reference oscillator signal (LO ref) is provided in the receiver (19), by means of which a regulating signal for the amplifying regulation can be supplied to the amplifiers (36a, 36b).

10. Device according to claim 9, **characterised in that** there is the connection of the receiver (19) to the air antenna (27) via an uplink path (ULT, 77) on the receiver side, the house distribution network (HN) and an uplink path (ULA, 85) on the antenna side, wherein, in this way, an amplifier (46) is preferably provided in the uplink path (ULA; 85) on the antenna side, said amplifier comprising an amplification regulator, in such a way that the permissible equivalent isotropic radiation power (EIRP) is not exceeded.

11. Device according to one of claims 1 to 10, **characterised in that** a frequency turnout (39) is provided at the output of the frequency conversion device (F1) on the antenna side before feeding into the house distribution network (HN) for feeding the receipt signals converted into different intermediary ranges (fd1, fd2), and/or a further frequency turnout (57) is provided on the input side in the frequency back-conversion device (F2) on the receiver side, by means of which the receipt signals converted into the different intermediary frequency ranges (fd1, fd2) can be split on two downlink paths (DLT) on the receiver side.

12. Device according to one of claims 1 to 11, **characterised in that** the frequency conversion device (F1) on the antenna side in the region of the air interface (27) or in the antenna (29) and/or the frequency back-conversion device (F2) on the receiver side is or are integrated in the receiver (19).

## Revendications

1. Dispositif de réception et d'émission de signaux destinés à un réseau de radiocommunications, comprenant les particularités suivantes :
- il présente une interface radio (27) présentant une antenne MIMO (29) au moins sous la forme d'une antenne bipolarisée ou sous la forme de deux antennes destinées à une exploitation MIMO au moins dans un sens radio, c.-à-d. en liaison descendante ou en liaison montante,
- il présente au moins un amplificateur d'émission (46) et au moins deux amplificateurs de réception (36a, 36b),
- l'au moins un amplificateur d'émission (46) et les au moins deux amplificateurs de réception (36a, 36b) sont branchés à un réseau de distribution domestique (HN) dans lequel des signaux de réception obtenus par le biais de l'interface radio (27) sont injectés et des signaux d'émission peuvent être conduits à l'interface radio par le biais du réseau de distribution domestique (HN),
- un dispositif de conversion de fréquence (F1) côté antenne est prévu entre l'interface radio (27) et le réseau de distribution domestique (HN),
- le dispositif de conversion de fréquence (F1) côté antenne comprend au moins un convertisseur de fréquence (38a, 38b), moyennant lequel
a) les signaux de réception (Sd) obtenus par le biais de l'au moins une polarisation (P1 ou P2) de l'antenne bipolarisée (29) ou
b) les signaux de réception (Sd) obtenus par le biais d'au moins une des au moins deux antennes (29) avec une fréquence d'émission (fd) peuvent être convertis dans une plage de fréquences intermédiaires (fd1, fd2) libres et/ou non utilisées dans le réseau de distribution domestique (HN),
- au moins un dispositif de rétablissement de fréquence (F2) côté récepteur est prévu entre le réseau de distribution domestique (HN) et un récepteur (19),
- le dispositif de rétablissement de fréquence (F2) côté récepteur est conçu de telle façon qu'un rétablissement, dans le domaine de fréquences reçues (fd), des fréquences (fd1, fd2) converties dans la plage de fréquences intermédiaires libres et/ou non utilisées peut être réalisé,
- le dispositif de conversion de fréquence (F1) comprend deux voies de liaison descendante (DLA ; 35a, 35b) côté antenne sur lesquelles les signaux reçus (Sd) peuvent être convertis séparément dans des plages de fréquences intermédiaires (fd1, fd2) respectivement différentes et décalées entre elles, par le biais des au moins deux antennes ou des au moins deux polarisations (P1, P2) de l'au moins une antenne bipolarisée (29), et
- les deux voies de liaison descendante (DLA ; 35a, 35b) côté antenne comprennent chacune un convertisseur de fréquence (38a, 38b) du dispositif de conversion de fréquence (F1) côté antenne, un oscillateur local (LO1, LO2) respectif étant associé aux convertisseurs de fréquence (38a, 38b) aux fins de la conversion de fréquence, et les deux oscillateurs locaux (LO1, LO2) étant en synchronisation au moyen d'un oscillateur de référence (67) commun.

2. Dispositif selon la revendication 1, **caractérisé en ce que** le dispositif de conversion de fréquence (F1) est prévu sur ou dans l'interface radio (27) ou l'antenne (29) connexe et/ou **en ce que** le dispositif de rétablissement de fréquence (F2) côté récepteur est prévu pour le rétablissement de fréquence auprès du récepteur (19) ou dans celui-ci.

3. Dispositif selon l'une des revendications précédentes, **caractérisé en ce que** deux voies de liaison descendante (DLT ; 75a, 75b) côté récepteur sont prévues dans le dispositif de rétablissement de fréquence (F2) côté récepteur, moyennant quoi les plages de fréquences intermédiaires (fd1, fd2) décalées entre elles et séparées par un duplexeur (57) peuvent être rétablies dans ladite fréquence de réception (fd) par le biais d'un rétablisseur de fréquence (61a, 61b) respectivement prévu dans chacune des deux voies de liaison descendante (DLA ; 75a, 75b) côté récepteur.

4. Dispositif selon l'une des revendications précédentes, **caractérisé en ce qu'**il est conçu de telle façon que, outre les plages de fréquences intermédiaires (fd1, fd2), le signal d'oscillateur de référence (LOref) produit par l'oscillateur de référence (67), et décalé de ces dernières, est lui aussi injecté dans le réseau de distribution domestique (HN), moyennant quoi les oscillateurs locaux (71a, 71b) prévus dans la voie de liaison descendante (DLT, 75a, 75b) côté récepteur peuvent être pilotés pour piloter les rétablisseurs de fréquence (61a, 61b).

5. Dispositif selon l'une des revendications 1 à 3, **caractérisé en ce que** le dispositif de conversion de fréquence (F1) côté antenne est conçu de telle façon que les deux oscillateurs locaux (69a, 69b) prévus pour les deux convertisseurs de fréquence (38a, 38b) produisent chacun une fréquence d'oscillateur local (fLO1, fLO2) qui est injectée dans le réseau de distribution domestique (HN), ledit dispositif de rétablissement de fréquence (F2) côté récepteur étant conçu de telle façon que deux oscillateurs locaux (71a, 71b) puissent être exploités au moyen de ces deux fréquences d'oscillateur local (fLO1, fL02), moyennant quoi les rétablisseurs de fréquence (61a, 61b) associés dans les deux voies de liaison descendante (75a, 75b) côté récepteur sont pilotés.

6. Dispositif selon l'une des revendications 1 à 3, **caractérisé en ce qu'**il est prévu un oscillateur de référence dans le récepteur (19), servant à piloter les deux oscillateurs locaux (71a, 71b) pour exploiter les deux rétablisseurs de fréquence (61a, 61b).

7. Dispositif selon l'une des revendications 1 à 6, **caractérisé en ce qu'**il est prévu une régulation du niveau du signal de réception (Sd), de préférence au point d'injection dans le récepteur (19).

8. Dispositif selon l'une des revendications 1 à 7, **caractérisé en ce qu'**un amplificateur (36a, 36b) est respectivement installé en amont des convertisseurs de fréquence (38a, 38b) prévus au moins dans les deux voies de liaison descendante (DLA ; 35a, 35b) côté antenne.

9. Dispositif selon la revendication 8 et la revendication 4, **caractérisé en ce que** le récepteur (19) est conçu de telle façon qu'il y est sauvegardé une information concernant l'intensité du signal d'oscillateur de référence (LOref) injecté dans le réseau de distribution domestique (HN) par le dispositif de conversion de fréquence (F1) côté antenne, et **en ce qu'**un dispositif de mesure d'atténuation pour le signal d'oscillateur de référence (LOref) reçu est prévu dans le récepteur (19), moyennant quoi un signal de régulation pour la commande du gain peut être conduit aux amplificateurs (36a, 36b).

10. Dispositif selon la revendication 9, **caractérisé en ce que** le branchement allant du récepteur (19) jusqu'à l'antenne radio (27) est constitué par le biais d'une voie de liaison montante (ULT, 77) côté récepteur, du réseau de distribution domestique (HN) et d'une voie de liaison montante (ULA, 85) côté antenne, un amplificateur (46) étant prévu sur ce chemin, de préférence dans la voie de liaison montante (ULA ; 85) côté antenne, et comprenant une commande du gain permettant de ne pas dépasser la puissance isotrope rayonnée équivalente (EIRP) permissible.

11. Dispositif selon l'une des revendications 1 à 10, **caractérisé en ce qu'**il est prévu, à la sortie du dispositif de conversion de fréquence (F1) côté antenne, en amont de l'injection dans le réseau de distribution domestique (HN), un duplexeur de fréquence (39) destiné à injecter les signaux de réception convertis dans différentes plages de fréquences intermédiaires (fd1, fd2), et/ou **en ce qu'**il est prévu un autre duplexeur de fréquence (57) côté entré dans le dispositif de rétablissement de fréquence (F2) côté récepteur, moyennant quoi les signaux de réception convertis dans les différentes plages de fréquences intermédiaires (fd1, fd2) peuvent être divisés sur deux voies de liaison descendante (DLT) côté récepteur.

12. Dispositif selon l'une des revendications 1 à 11, **caractérisé en ce que** le dispositif de conversion de fréquence (F1) côté antenne est intégré à proximité de l'interface radio (27) ou dans l'antenne (29) et/ou **en ce que** le dispositif de rétablissement de fréquence (F2) côté récepteur est intégré dans le récepteur (19).
